(19) Europäisches Patentamt
European Patent Office
Office européen des brevets

(11) **EP 3 380 990 B1**

(12) **EUROPEAN PATENT SPECIFICATION**

(45) Date of publication and mention
of the grant of the patent:
**07.06.2023 Bulletin 2023/23**

(21) Application number: **15813910.5**

(22) Date of filing: **24.11.2015**

(51) International Patent Classification (IPC):
**G06V 30/162** (2022.01)     **G06V 30/184** (2022.01)
**G06V 20/62** (2022.01)      **G06V 10/44** (2022.01)

(52) Cooperative Patent Classification (CPC):
**G06V 20/63; G06V 10/44; G06V 30/162;**
**G06V 30/184;** G06V 30/10

(86) International application number:
**PCT/IB2015/059090**

(87) International publication number:
**WO 2017/089865 (01.06.2017 Gazette 2017/22)**

(54) **EFFICIENT UNCONSTRAINED STROKE DETECTOR**

DETEKTOR FÜR EFFIZIENTEN UNEINGESCHRÄNKTEN HUB

DÉTECTEUR DE TRAITS EFFICIENT SANS CONTRAINTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.10.2018 Bulletin 2018/40**

(73) Proprietor: **Ceske vysoke uceni technicke v Praze
160 00 Praha 6 - Dejvice (CZ)**

(72) Inventors:
• **BUSTA, Michal**
  **19000 Praha 9 (CZ)**
• **NEUMANN, Lukas**
  **15000 Praha 5 (CZ)**
• **MATAS, Jiri**
  **25263 Rozotky u Prahy (CZ)**

(74) Representative: **Kratochvil, Vaclav
Patent and Trademark Office
P.O. Box 26
295 01 Mnichovo Hradiste (CZ)**

(56) References cited:
**EP-A1- 0 961 218     US-A1- 2015 213 312**

• **MOHAMED KAMEL ET AL: "EXTRACTION OF
BINARY CHARACTER/GRAPHICS IMAGES
FROM GRAYSCALE DOCUMENT IMAGES",
CVGIP GRAPHICAL MODELS AND IMAGE
PROCESSING, ACADEMIC PRESS, DULUTH, MA,
US, vol. 55, no. 3, 1 May 1993 (1993-05-01), pages
203-217, XP000362596, ISSN: 1077-3169**
• **ROSTEN E ET AL: "Faster and Better: A Machine
Learning Approach to Corner Detection", IEEE
TRANSACTIONS ON PATTERN ANALYSIS AND
MACHINE INTELLIGENCE, IEEE COMPUTER
SOCIETY, USA, vol. 32, no. 1, 1 January 2010
(2010-01-01), pages 105-119, XP011321483, ISSN:
0162-8828, DOI: 10.1109/TPAMI.2008.275**
• **ROSTEN E ET AL: "Fusing Points and Lines for
High Performance Tracking", COMPUTER
VISION, 2005. ICCV 2005. TENTH IEEE
INTERNATIONAL CONFERENCE ON BEIJING,
CHINA 17-20 OCT. 2005, PISCATAWAY, NJ,
USA,IEEE, LOS ALAMITOS, CA, USA, vol. 2, 17
October 2005 (2005-10-17), pages 1508-1515,
XP010856992, DOI: 10.1109/ICCV.2005.104 ISBN:
978-0-7695-2334-7**

**Description**

**Technical field**

Scene text localization and recognition, a.k.a. the text-in-the-wild problem, is a key component of many applications such as automated translation, image/video database indexing, assistance to the visually impaired, etc. So far, unlike printed document OCR, no method has reached sufficient accuracy and speed for a practical exploitation.

It is, therefore, a need in the art for a fast and accurate text localization and recognition. Stroke detection has applications in extraction of structure information from images, such as bar codes.

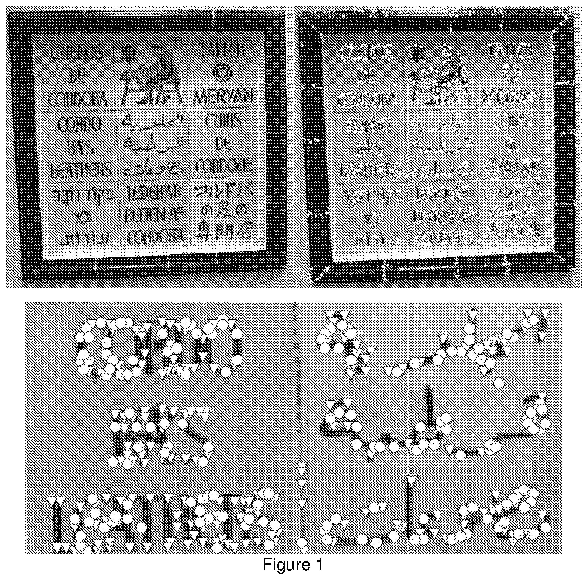

We propose a novel easy-to-implement stroke detector which is significantly faster and produces significantly less false detections than the detectors commonly used by scene text localization methods. Following the observation that text in virtually any script is formed of strokes, stroke keypoints are efficiently detected, see Figure 1, and then exploited to obtain stroke segmentations.

We also propose an efficient classification step to eliminate segmentations which do not correspond to text fragments. Text fragment can be a single character, a group of characters, a whole word or a part of a character. The classifier exploits features already calculated in the detection phase and an effectively approximated "strokeness" feature, which plays an important role in the discrimination between text fragments and a background clutter.

Last but not least, an efficient text clustering algorithm based on text direction voting is proposed, in order to aggregate detected segmentations into text line structures and to allow processing by subsequent stages, e.g. an OCR module. When the proposed detector is plugged into a scene text localization and recognition pipeline, the state-of-the-art text localization results are maintained whilst the processing time is significantly reduced.

The proposed detector has high application potential e.g. in real-time scene text detection in a video stream on mobile phones and embedded systems since a straightforward, single-thread non-optimized version of the algorithm runs in near real-time. Since all stages are scale and rotation invariant and they are not script-specific, a wide variety of fonts and scripts such as Latin, Hebrew, and Chinese can be detected. The detector can be used to produce repeatable local features for e.g. image matching and retrieval.

**Background Art**

As scene text localization can be computationally very expensive, several strategies have emerged in the literature to overcome this issue. The first approach is based on a sliding window which is shifted across the image and at each position a presence of a character, see Non Patent document [1], [9] or a word Non Patent document [10] is checked by a classifier. The main drawback of these methods is that the number of windows that needs to be evaluated grows rapidly if text with different parameters (scale, rotation, aspect) is to be found. Typical processing time ranges from tens of seconds (Non Patent document 8) to minutes per a single 1MPx image.

This is the main reason why the region-based approach, cf. Non Patent document [2], [3], [6] has become increasingly exploited as text of different parameters can be detected in a single or only a few passes. The recently most successful methods, see Non Patent document [2], [6], [10] and the ICDAR Robust Reading competition winner, see Non Patent document [4], [11] also fall into this category as individual characters are found by the MSER detector, see Non Patent document [5]. Despite being faster than sliding-window methods, the fastest region-based methods have running times ranging from half a second to a second per a 1MPx image. The main cause is that the region detector is not text-specific and therefore the false detections require additional classification step, which slows down the processing. Moreover in the case of the most popular MSER detector, the processing time of the detector itself is still around 0.3s for a 1MPx pixel even though its complexity is linear in the number of pixels. Let us also note that the exact processing time statistics for the published methods are not always available, because time is not measured as part of ICDAR Robust Reading competitions and not all authors publish this information.

The observation that text is formed of strokes has been first exploited in the context of text detection in the wild by Epshtein et al. [3] and more recently by Neumann and Matas [6]. In both cases this observation was used to design a discriminative feature for classification of regions obtained by a standard, non text-specific detector. The method of Epshtein et al. detects candidate regions using the Canny edge detector. Pairs of parallel edges are used to estimate the stroke width and to group pixels into regions on the basis of a similar stroke width value. The main drawbacks are the method's sensitivity to noise and motion blur as it relies on successful edge detection and the relative slowness - the authors state the average processing time is 0.94s per image.

The method of Neumann and Matas [6] exploits the MSER detector and then classifies the detected MSERs as either a character, a multi-character or background using the "strokeness" feature. The method achieves state-of-the-art results in scene text localization and provides text recognition output, but as in the previous case the main drawback is its reliance on a detector which is not text-specific. As stated by the authors, the average processing time for both the text localization and recognition stages is 0.8s per image.

Other methods focus only on recognition of text manually found by a human annotator, therefore assuming there might exist a text localization method with a 100% accuracy. In the latest ICDAR Robust Reading competition [4], the winner [1] was able to correctly recognize 82.8% of the cropped words.

We refer the reader to the latest ICDAR Robust Reading competition results [4] for a more thorough scene text methods survey.

Document US 2015/213312 provides an image processing device capable of specifying a character area included in an image, nevertheless it does not contain any contiguous region test.

Document EP 0961218 describes a method of binarization to be used in an OCR system consisting in determining text pixels by checking.

**Brief Description of Drawings**

Figure 1: The stroke detector output. Stroke End Keypoints (SEK) marked with $\nabla$, Stroke Bend Keypoints (SBK) marked with o.

Figure 2: Stroke Ending Keypoint (SEK). Pixels $x_{11}, x_0$, of the $P_s$ partitioning marked dark, pixels $x_1...x_{10}$ of the $P_b$ partitioning marked white, inner pixels **c** for the connectivity test.

Figure 3: Stroke Keypoint (SK). Pixels $x_0, x_1$, of the $P_s$ partitioning marked dark, pixels $x_2...x_4$ of the $P_b$ partitioning marked white, pixels $x_5, x_6$, of the $P_s'$ partitioning marked dark, pixels $x_7...x_{11}$ of the $P_b'$ partitioning marked white, inner pixels **c** for the connectivity test.

Figure 4: Stroke Bend Keypoint (SBK). Pixels $x_0, x_{11}$, of the $P_s$ partitioning marked dark, , pixels $x_1...x_3$ of the $P_b$ partitioning marked white, pixels $x_4$, of the $P_s'$ partitioning marked dark, pixels $x_5...x_{10}$ of the $P_b'$ partitioning marked white, inner pixels **c** for the connectivity test.

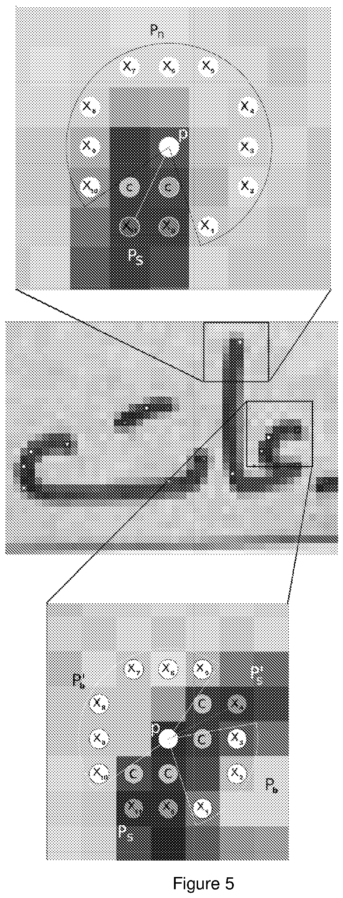

Figure 5: The Stroke Ending Keypoint (top) and the Stroke Bend Keypoint (bottom). Pixels of the $P_s$ and $P_s'$ partitioning marked dark, pixels of the $P_b$ and $P_b'$ partitioning marked white, inner pixels **c** for the connectivity test.

Figure 6: The proposed keypoint detector according to an embodiment of the invention

Figure 7: Keypoint segmentation: segmentation **s** is result of thresholding operation based on properties of keypoint **k**

Figure 8: End-To-End Pipeline

Figure 9: The Character Strokes Area (CSA) feature is based on the observation that the area of an ideal stroke is the product of the stroke width $s_w$ and the length of the stroke $s_l$

Figure 10: Character Stroke Area (CSA) approximation by stroke keypoints. Initial Stroke Ending Keypoint (a). First Stroke Straight Keypoint found (b). Next Stroke Straight Keypoint found (c). All Stroke Straight Keypoints found, stroke length illustrated by the dark line inside region (d).

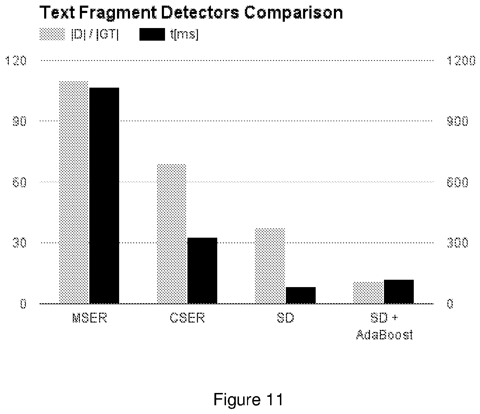

Figure 11: Text Fragment Detectors Comparison. The comparison has been done on ICDAR 2013 dataset (Non Patent document 4). The imprecision |D|/|GT| is given by the number of detected regions |D| divided by the number of regions in ground-truth. Proposed Stroke Detector (SD) compared with MSER detector.

**Description of Embodiments**

One or more embodiments or implementations are now described with reference to the enclosed figures. The invention is as defined in claim 1.

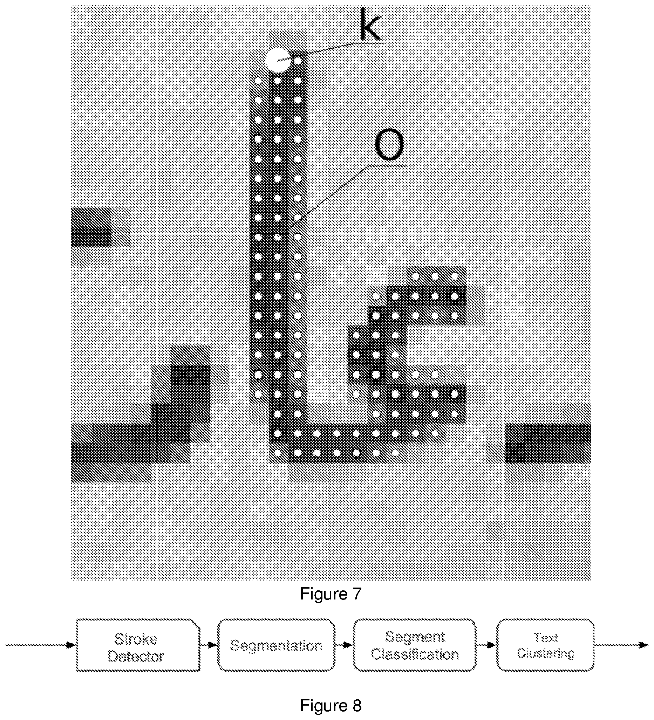

In one embodiment the proposed stroke-specific keypoint detector can be connected into standard text detection pipeline, see Non Patent document 6, Figure 8, where at first stage, the text fragments i.e characters, group of characters, words and parts of a characters, are detected - Stroke Detector, Segmentation, from the detected text fragments the text lines are formed - Segment Classification, Text Clustering.

The stroke segments detection is described in chapters Stroke Keypoint Detector, Keypoint Segmentation, Segmentation Classification. Subsequent steps are described in chapters Segmentation Classification and Text Clustering.

**Stroke Keypoint Detector** - **General formulation**

The proposed keypoint detector responds to image structures that are specific parts of a stroke, i.e. a curvilinear thin region:

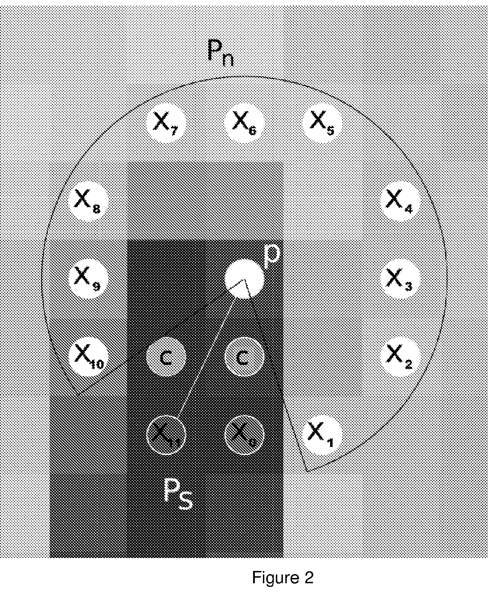

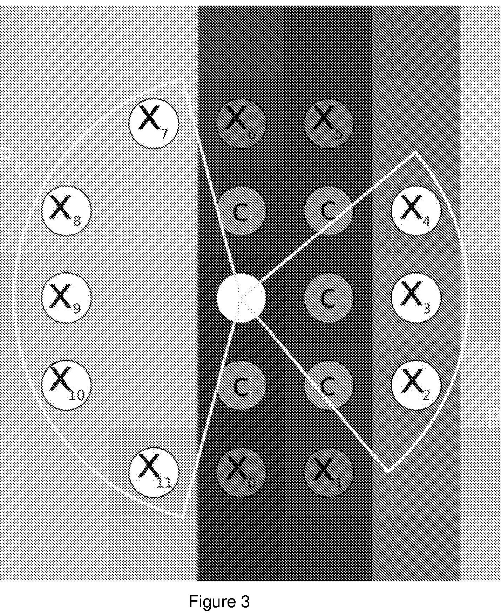

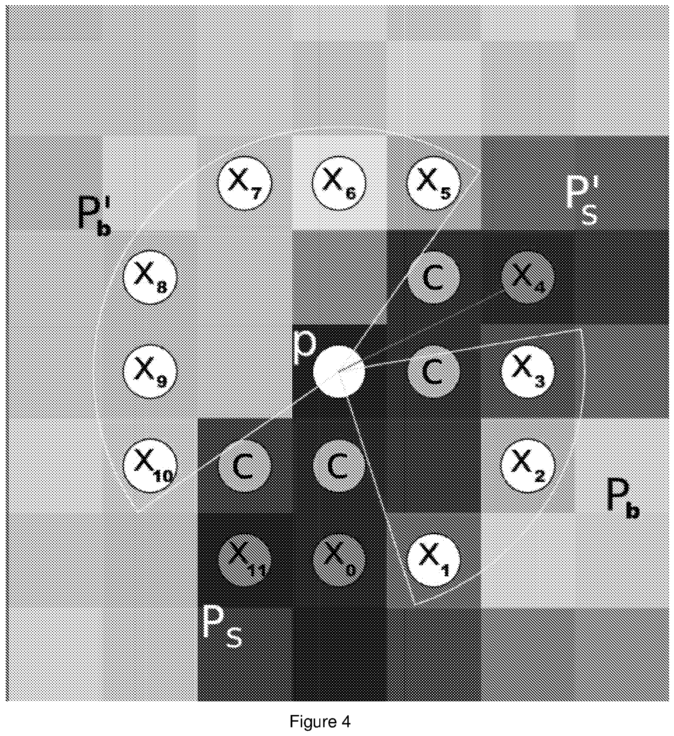

- the Stroke Ending Keypoint (SEK) to stroke endings. see Figure 2, not belonging to the invention
- the Stroke Keypoint (SK) within the segment of a stroke, see Figure 3. The SK has one subclass: the Stroke Bend Keypoint (SBK) that responds a bent segment of stroke, see Figure 4.

The keypoint detector works on circle pattern of size **N**, which can expressed by pixel offsets against the central pixel **p**.

Then for each pixel **p** in an image, pixel intensities **I** around a circle of **N** pixels x $\in$ {1...N} are examined and each pixel **x** is assigned one of three labels:

$$L(p,x) \ = \ d, if \ I(x_i) \ \leq I(p) - m \ \text{(darker)},$$

$$L(p,x) \ = \ s, if \ I(p) - m \ \leq I(x_i) \ \leq I(p) + m \ \text{(same)},$$

$$L(p.x) \ = \ b, if \ I(x_i) \geq I(p) + m \ \text{(brighter)},$$

where **m** is a margin, which is a parameter of the detector, which defines minimal contrast.

The pixel **p** is a **Stroke Ending Keypoint** (SEK), not belonging to the invention, if there exists two contiguous partitionings $P_s$ and $P_b$ (or $P_s$ and $P_d$) $|P_s| \in \{1,2,... k\}$a $P_b = N - |P_s|$ (or $P_d = N-|P_s|$), where $P_l$ denotes a contiguous partitioning of the pixels **x** with the label **l** and **k** is constant which defines the maximum detectable stroke width, it is advantageous when $k = N14$. In other words, the pixel **p** is a SEK if there exists a contiguous circle segment of at least **N - k** pixels which are darker (or brighter) than the pixel **p**, whilst the remaining pixels of the circle have a similar intensity to the pixel **p.** The keypoint can be either positive or negative, depending whether the intensity of the stroke is higher or lower than the background.

Using the same notation, the pixel **p** is a Stroke Keypoint (SK) if there exists four contiguous partitionings $P_s,P_s',P_b,P_b'$ (or $P_s,P_s',P_d,P_d'$) such that $|P_s|,|P_s'| \in \{1,2,... k\}$, $|P_d'|+ |P_d| = N - |P_s| - |P_s'|$, or $|P_b'| + |P_b| = N - |P_s| - |P_s'|$. The pixel **p** is a SK if there are two contiguous circle segments which are darker or brighter than the pixel **p**, and two distinct circle segments which have similar intensity to the pixel **p**, each segment with maximum length of **k** pixels.

The pixel **p** is a Stroke Bend Keypoint (SBK) if there exists four contiguous partitionings $P_s,P_s',P_b,P_b'$ (or $P_s,P_s',P_d,P_d'$) such that $|P_s|,|P_s'| \in \{1, 2,... k\}, P_d > N/2, |P_d'| = N - |P_d| - |P_s| - |P_s'|$ (or $P_b > N/2, |P_b'|+ |P_b| = N - |P_s| - |P_s'|$). The pixel **p is a** SBK if there is a contiguous circle segment of at least *N/2 + 1* pixels which are darker or brighter than the pixel **p**, two distinct circle segments which have similar intensity to the pixel **p** and the remaining pixels on the circle are darker or brighter than the pixel **p.**

The implementation of the aforementioned tests is very straightforward and the tests can be computed by a single pass around the N pixel circle. The three tests above are useful to understand the invention and hoe the claims are interpreted. It is noted however that the invention as defined in independent claim 1 does not correspond to any of the three tests above.

For most practical applications it is advantageous to use just the SEK and SBK keypoints, since the detection speed can be increased by the **accessibility test**.

**Accessibility test**: The computational complexity of the detector is reduced even further (by the factor of 2) by inserting a simple rule, which examines the opposite pixels and tests that all opposite pixels are brighter than $I(p) + m$ or darker than $I(p) - m$. An opposite pixel is the pixel which lies directly opposite on the N pixel circle. If none of the conditions is met, the pixel p cannot be a SEK or SBK keypoint and is quickly rejected without any further processing.

The final verification step of the stroke detector is a connectivity test, which ensures the inner circle pixels $P_i$ between the pixel **p** and the pixels $P_s$ also satisfy the intensity margin, i.e. $I_p - m < I_x < I_p + m$, $\forall x \in P_i$ see Figure 2, Figure 3, Figure 4. The purpose of the test is to eliminate false detections, because if the pixel **p** is placed on a stroke, the pixels in the $P_s$ partitioning(s) must be connected to it.

**Stroke Keypoint Detector** - **Example**

The example implementation of stroke specific keypoint detector does not belonging to the invention and works on circle pattern given by 12 pixels with offsets: [0,2], [1,2], [2,1], [2, 0], [2, -1], [1, -2], [0, -2], [-1, -2], [-2, -1], [-2, 0], [-2,1], [-1,2] (Figure 2, Figure 3, Figure 4) .

Then for each pixel **p** in an image, pixel intensities **I** around a circle of 12 pixels x ∈ {1... 12} are examined and each pixel x is assigned one of three labels:

$$L(p,x) \;=\; d, if\, I(x_i) \,\le I(p) - m\ (\text{darker}),$$

$$L(p,x) \;=\; s, if\ I(p) - m\ \le I(x_i)\ \le I(p) + m\ (\text{same}),$$

$$L(p.x) \;=\; b, if\, I(x_i) \ge I(p) + m(\text{brighter})$$

where $m$ is a margin, which is a parameter of the detector (which defines minimal contrast). It should be noted that the circle pattern can be given by a different number of points.

The pixel **p** is a **Stroke Ending Keypoint** (SEK) if there exists two contiguous partitionings $P_s$ and $P_b$ (or $P_s$ and $P_d$) $|P_s| \in \{1, 2, 3\}$ a $P_b = 12 - |P_s|$ (or $P_d = 12 - |P_s|$), where $P_l$ denotes a contiguous partitioning of the pixels **x** with the label $l$. In other words, the pixel **p** is a SEK if there exists a contiguous circle segment of at least 9 pixels which are darker (or brighter) than the pixel **p**, whilst the remaining pixels of the circle have a similar intensity to the pixel p. The keypoint can be either positive or negative, depending whether the intensity of the stroke is higher or lower than the background.

Using the same notation, the pixel **p** is a Stroke Bend Keypoint (SBK) if there exists four contiguous partitionings $P_s,P_s',P_b,P_b'$ (or $P_s,P_s',P_d,P_d'$) such that $|P_s|,|P_s'| \in \{1, 2, 3\}, P_d > 6, |P_d'| = 12 - |P_d| - |P_s| - |P_s'|$ (or $P_b > 6, |P_b'| = 12 - |P_b| - |P_s| - |P_s'|$). The pixel p is a SBK if there is a contiguous circle segment of at least 6 pixels which are darker (or brighter) than the pixel p, two distinct circle segments which have similar intensity to the pixel p and the remaining pixels on the circle are darker (or brighter) than the pixel **p**.

The final verification step of the stroke detector is a connectivity test, which ensures the inner circle pixels $P_i$ between the pixel **p** and the pixels $P_s$ also satisfy the intensity margin, i.e. $I_p - m < I_x < I_p + m, \forall x \in P_i$ (see Figure 2). The purpose of the test is to eliminate false detections, because if the pixel **p** is placed on a stroke, the pixels in the $P_s$ partitioning(s) must be connected to it. Let us note that this test does not represent any significant overhead, as in the worst case only 3 pixels have to be examined.

The implementation of the aforementioned tests is very straightforward and the tests can be computed by a single pass around the 12 pixel circle. The computational complexity of the detector is reduced even further (by the factor of 2) by inserting a simple rule, which examines the opposite pixels and tests that all opposite pixels are brighter than $I(p) + m$ or darker than $I(p) - m$. An opposite pixel is the pixel which lies directly opposite on the 12 pixel circle. If none of the conditions is met, the pixel **p** cannot be a SEK or SBK keypoint and is quickly rejected without any further processing.

In order to eliminate stroke keypoints which lie close to each other, a simple non-maximum suppression is performed on a 3×3 neighborhood and only the keypoint with the highest contrast (i.e. $max(I_x - I_p) : x \in P_b$ respectively $max(I_p - I_x) : x \in P_d$) is kept.

The optimal values of the detector parameters were found experimentally using the ICDAR 2013 Training dataset [4], which contains 4784 characters in 229 images. A character is considered as detected, if there is at least one keypoint whose position intersects with the character ground truth segmentation. The value of each parameter was chosen to obtain the best trade-off between the detector imprecision and the number of missed characters, i.e. recall.

The stroke detector has four parameters: circle size, margin, scaling factor and the maximum number of keypoints per image. The most important parameter is the circle size, whose optimal value is 12 pixels to allow detection of characters, i.e. strokes which are close to each other.

The margin $m$ parameter controls the trade-off between imprecision, the number of false and repeated detections, and the number of missed characters. The margin value used in the experiments was $m$=13.

Because the detector is only triggered by strokes whose width is comparable to the pixel circle radius, i.e. two or three pixel wide, the keypoints are detected in an image scale-space to allow detection of wider strokes. Each level of the pyramid is calculated from the previous one by reducing the image size by the scaling factor f. In our implementation, bilinear approximation was used for image resizing. The scaling factor f is the third parameter of the detector and its optimal value was experimentally found to be 1.6.

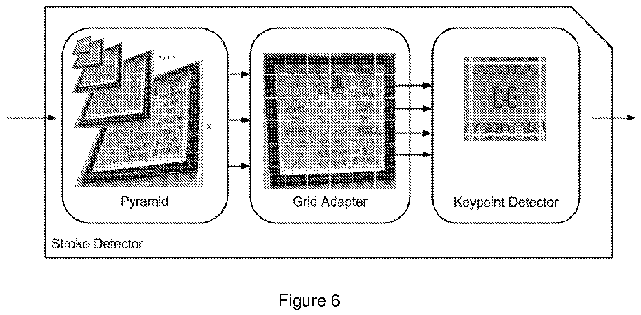

The last parameter of the detector is the maximum number of keypoints per image. An input image is partitioned into uniformly-sized cells, see Figure 6, and the number of detected keypoints in each cell is limited by ordering the keypoints by their contrast and eliminating the keypoints whose position in the ordered set is above the cell limit. The value of 4000 keypoints per image was chosen as a value commonly used by standard keypoint detectors, seeNon Patent document [7].

However, the above values of the parameters should not limit the disclosure of the invention, different values of the parameters also fall into the scope of the invention.

**Keypoint Segmentation**

As successfully demonstrated by the methods based on MSERs, see Non Patent document [6], [11], individual characters can be segmented from the background using a threshold value unique for each character,in MSERs, the threshold value is found as the center of the region stability interval.

In one embodiment, the threshold value is found directly from the stroke keypoint. Given a positive keypoint $\mathbf{p}$ and its associated set of darker pixels $P_d$, the segmentation threshold $\theta_p$ is the intensity value just above the intensity of the darkest pixel in $P_d$: $\theta_p = max(I_x) + 1 | x \in P_d$.

Similarly, for a negative keypoint, the segmentation threshold $\theta_p$ is the intensity value just below the intensity of the brightest pixel in $P_b$: $\theta_p = min(I_x) - 1 | x \in P_b$.

The threshold value $\theta_p$ is then effectively exploited by a standard flood-fill algorithm to generate a stroke for each keypoint, see Figure 6.

**Segmentation and Classification**

In order to reduce the still relatively high false detection rate of the stroke detector and to make the processing in the subsequent stages faster, an efficient classification stage can be used to filter the output of the proposed detector.

Drawing inspiration from a successful MSER segmentation classifier proposed by Neumann and Matas, see Non Patent document [6], four rotation and scale invariant features are employed by a Gentle AdaBoost classifier to classify segmentations as either a text fragment, typically a character or a background clutter: compactness, convex hull area ratio, holes area ratio and the Character Strokes Area (CSA). All features are efficiently calculated as part of the segmentation process, with the exception of the Character Strokes Area feature.

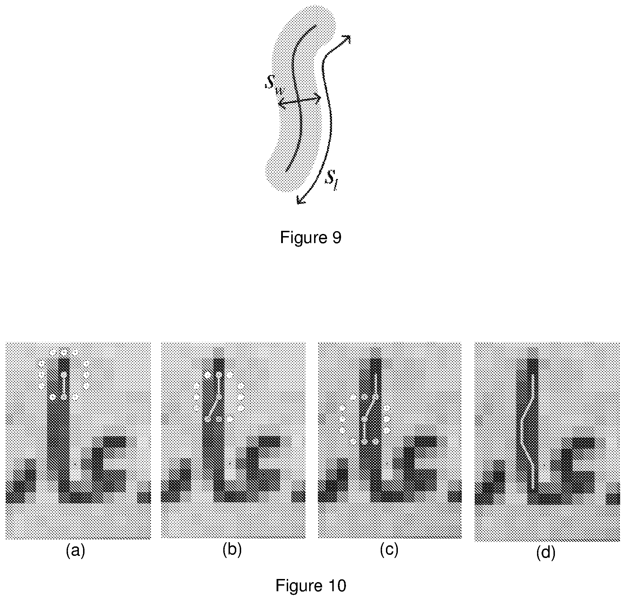

The Character Strokes Area (CSA) feature is based on the observation that a character can be drawn by taking a brush with a diameter of the stroke width and drawing through middle points of the character, see Figure 9. Since the area of an ideal stroke is the product of the stroke width and the length of the stroke, the "strokeness" of a segmentation is estimated by calculating the ratio between the Character Strokes Area and the number of pixels in the segmentation. The ratio therefore estimates the proportion of the segmentation pixels which are part of a character stroke and allows to efficiently discriminate between text fragments, as characters, groups of characters, whole words or parts of characters, and a background clutter. In the original form, see Non Patent document [6], a distance map and an iterative NMS is employed to calculate the character strokes area. Since the high computational complexity of such process represents a significant overhead, we propose an approximate but significantly faster calculation of the Character Strokes Area feature.

Given a segmentation r, a set of Stroke Straight Keypoints (SSK) is found for each Stroke Ending Keypoint (SEK) $\mathbf{p}$ which intersects with the segmentation r using the following iterative algorithm, see Figure 10:

1. Take the Stroke Ending Keypoint $\mathbf{p}$ as the starting point

2. Move the point p to the darkest (brightest) pixel of the $P_s$ pixels always in the direction away from the stroke ending

3. The point $\mathbf{p}$ is a Stroke Straight Keypoint (SSK) if there are four contiguous partitionings $P_s,P_s',P_b,P_b'$ (or $P_s,P_s',P_d,P_d'$) such that $|P_s|,|P_s'| \in \{1,2,3\}$

4. If the point $\mathbf{p}$ is a SSK, repeat from the step 2, otherwise terminate

The character strokes area $A_s(r)$ of the segmentation r is then calculated as:

$$A_s(r) = \sum_{p \in SSK_r} 3|P_s| + \sum_{p \in SBK_r} 3(|P_s|_p + |P_s'|_p)$$

where $SSK_r$ and $SBK_r$ is the set of Stroke Straight respectively Stroke Bend Keypoints intersecting with the segmentation r and $|P_s|_p$ ($|P_s'|_p$) is the size of the partitioning $|P_s|$ ($|P_s'|$) associated with the keypoint **p**.

The proposed approximate algorithm is almost 60 times faster, yet the impact on the classification accuracy is negligible.

**Text Clustering**

In next stage, the unordered set of segmentations classified as text fragments can be clustered into ordered sequences, where each cluster or sequence shares the same text direction in the image. In other words, individual characters or groups of characters or their parts are clustered together to form lines of text.

Let us denote the set of text fragment segmentations as R. For each segmentation $r_i \in R$, all segmentations $r_j \in R$ are found, such that $r_i$ and $r_j$ are neighbors. The segmentation $r_i$ is a neighbor of $r_j$ (denoted $N(r_i, r_j)$), if they are sufficiently close to each other, the distance is measured as the distance of their centroids and they have a comparable scale:

$$N(r_i, r_j) \; = \; 1, \left\| c(r_i) - c(r_j) \right\| < \; \alpha \; \sqrt{max(A(r_i), A(r_j))} \; max(\frac{A(r_i)}{A(r_j)}, \frac{A(r_j)}{A(r_i)}) \; < \; \beta$$

$$N(r_i, r_j) \; = \; 0, otherwise$$

where c(r) is the centroid of the segmentation r and A(r) is the convex hull area of the segmentation r. The parameter values $\alpha = 4$ and $\beta = 10$ were chosen experimentally and they provide sufficient tolerance for a vast majority of typographical models. Since the segmentation neighbor search is a simple search in a 2D space of points/centroids, it can be effectively implemented by partitioning the image into smaller cells and always considering segmentations just in the closest cells. Alternatively, one could use a standard/approximate nearest-neighbor algorithm.

Each pair of neighboring segmentations then casts a vote for their text direction, where the text direction is given by the line which passes through the two centroids of the neighboring pair. Drawing inspiration from the well-known Hough transform, each vote for a text direction is represented in the polar system $\rho = x \sin(\theta) + y \cos(\theta)$, so that vertical text lines can also be detected.

The two-dimensional parameter space $(\rho, \theta)$ is quantized into a fixed-sized matrix, so that small differences in the line parameters are eliminated and the text directions with the highest number of votes, i.e. the directions with the highest number of supporting pairs, can be easily found as local maxima in the matrix.

Each local maxima with its parameters $(\rho, \theta)$ then unambiguously induces a text cluster by simply taking all segmentations whose centroid lies on the line $(\rho, \theta)$ or the distance is smaller than the quantization error and ordering them in the direction of the line.

Since one segmentation can lie on multiple lines with different parameters $(\rho, \theta)$, the local maxima are processed in a decreasing order of number of their votes and each segmentation is allowed to be included only in a single text cluster. This process ensures that longer text lines are preferred over shorter ones and that intra-line text clusters are eliminated.

In various embodiments, it may be desirable to perform text detection and recognition in near-realtime from frames of a video stream, such as may be captured by mobile device, smart cameras or other embedded devices with limited computational resources.

**Citation List**

**Non Patent Documents**

[1] A. Bissacco, M. Cummins, Y. Netzer, and H. Neven. PhotoOCR: reading text in uncontrolled conditions. ICCV, 2013.

[2] C. Yao, X. Bai, W. Liu, Y. Ma, and Z. Tu. Detecting texts of arbitrary orientations in natural images. In CVPR 2012,

[3] B. Epshtein, E. Ofek, and Y. Wexler. Detecting text in natural scenes with stroke width transform. In CVPR 2010, pages 2963 -2970.

[4] D. Karatzas, F. Shafait, S. Uchida, M. Iwamura, S. R. Mestre, J. Mas, D. F. Mota, J. A. Almazan, L. P. de las Heras, et al. ICDAR 2013 robust reading competition. In ICDAR 2013, pages 1484-1493. IEEE, 2013.

[5] J. Matas, O. Chum, M. Urban, and T. Pajdla. Robust wide-baseline stereo from maximally stable extremal regions. Image and Vision Computing, 22:761-767, 2004.

[6] L. Neumann and J. Matas. Efficient scene text localization and recognition with local character refinement. arXiv preprint arXiv:1504.03522, 2015.

[7] E. Rublee, V. Rabaud, K. Konolige, and G. Bradski. Orb: an efficient alternative to sift or surf. In Computer Vision (ICCV), 2011 IEEE International Conference on, pages 2564-2571. IEEE, 2011.

[8] K. Wang, B. Babenko, and S. Belongie. End-to-end scene text recognition. In ICCV 2011, 2011.

[9] M. Jaderberg, A. Vedaldi, and A. Zisserman. Deep features for text spotting. In Computer Vision-ECCV 2014, pages 512-528. Springer, 2014.

[10] T. E. de Campos, B. R. Babu, and M. Varma. Character recognition in natural images. VISAPP, 05-08 February 2009, 2009.

[11] X.-C. Yin, X. Yin, K. Huang, and H.-W. Hao. Robust text detection in natural scene images. Pattern Analysis and Machine Intelligence, IEEE Transactions on, 36(5):970-983.

[12] MOHAMED KAMEL ET AL, "EXTRACTION OF BINARY CHARACTER/GRAPHICS IMAGES FROM GRAYSCALE DOCUMENT IMAGES", CVGIP GRAPHICAL MODELS AND IMAGE PROCESSING, ACADEMIC PRESS, DULUTH, MA, US, (19930501), vol. 55, no. 3, ISSN 1077-3169, pages 203 - 217, XP000362596 [A] 1-5 * paragraph 3.1 *

[13] - ROSTEN E ET AL, "Faster and Better: A Machine Learning Approach to Corner Detection", IEEE TRANSACTIONS ON PATTERN ANALYSIS AND MACHINE INTELLIGENCE, IEEE COMPUTER SOCIETY, USA, (20100101), vol. 32, no. 1, doi:10.1109/TPAMI.2008.275, ISSN 0162-8828, pages 105 - 119, XP011321483 [A] 1 * paragraph 3.1 *

[14] - ROSTEN E ET AL, "Fusing Points and Lines for High Performance Tracking", COMPUTER VISION, 2005. ICCV 2005. TENTH IEEE INTERNATIONAL CONFERENCE ON BEIJING, CHINA 17-20 OCT. 2005, PISCATAWAY, NJ, USA,IEEE, LOS ALAMITOS, CA, USA, (20051017), vol. 2, doi:10.1109/ICCV.2005.104, ISBN 978-0-7695-2334-7, pages 1508 - 1515, XP010856992 [A] 1 * chapter 5 *

**Claims**

1. An image stroke feature detection method comprising:

   for each pixel of interest (p) in an image, selecting all pixels on a circle centered at said pixel of interest;
   labelling each of the N pixels on said circle as similar, darker, or brighter based on comparison with intensity of the pixel of interest using a margin parameter;
   selecting pixels of interest where there is a segment of contiguous pixels on said circle labelled as darker or brighter (Pb), one or two distinct segments of the pixels on said circle are labelled as similar (Ps, Ps'), the length of these similar segments being smaller than or equal in length to N/4, and the remaining pixels are labelled as darker or brighter (Pb');
   In order to eliminate false detections perform a verification step by marking the pixel of interest as part of a detected image stroke feature if pixels (c) inside said circle labelled as similar using the margin parameter m, the one or two distinct segments labelled as similar, and said pixel of interest form a contiguous region.

2. The method of claim 1 when there are two distinct segments labelled as similar, one of the segments marked darker or brighter has a length of at least N/2-1 pixels.

3. A method according to claim 1 when there is one distinct segment labelled as similar, with an additional step of selecting a pixel where at least N/2+1 contiguous pixels on said circle are labelled as darker or brighter and the remaining pixels on said circle are labelled as similar.

4. A method according to any preceding claim where prior to the verification step, a pixel of interest for which pixels opposite on the circle are not darker than the pixel of interest minus the margin m or not brighter than the pixel of interest plus the margin m is rejected and the verification step is not performed.

**Patentansprüche**

1. Verfahren zur Detektion eines Strichs in einem Bild, umfassend:

   Für jedes interessierende Pixel (p) im Bild eine Auswahl aller Pixel auf einem Kreis, der um das angegebene interessierende Pixel zentriert ist;
   Bezeichnung jedes der N Pixel auf dem angegebenen Kreis als ähnlich oder heller abhängig von einem Vergleich mit der Intensität des interessierenden Pixels unter Verwendung des Bereichsparameters;
   eine Auswahl von interessierenden Pixeln, wo es ein Segment von kontinuierlichen Pixeln auf dem angegebenen Kreis gibt, die als dunkler oder heller (Pb) bezeichnet sind, ein oder zwei verschiedene Segmente von Pixeln auf dem angegebenen Kreis als ähnlich (Ps, Ps') bezeichnet sind, die Länge dieser ähnlichen Segmente ist kleiner oder gleich wie N/4, und die verbleibenden Pixel als dunkler oder heller (Pb') bezeichnet sind;
   die Ausführung eines Verifizierungsschritts, der zum Eliminieren falscher Detektionen verwendet wird, der auf der Bezeichnung eines interessierenden Pixels als Teil einer Strichdetektionsfunktion im Bild beruht, wenn Pixel (c) innerhalb des angegebenen Kreises unter Verwendung eines Bereichsparameters m als ähnlich bezeichnet sind, ein oder zwei unterschiedliche Segmente als ähnlich bezeichnet sind und einen zusammenhängenden Bereich mit dem interessierenden Pixel bilden.

2. Verfahren nach Anspruch 1, wobei zwei unterschiedliche Segmente als ähnlich bezeichnet sind, wobei eines der als dunkler oder heller bezeichneten Segmente eine Länge von mindestens N/2-1 Pixeln aufweist.

3. Verfahren nach Anspruch 1, wobei es ein unterschiedliches Segment gibt, das als ähnlich bezeichnet ist, mit dem weiteren Schritt der Pixelauswahl, wobei mindestens N/2+1 kontinuierliche Pixel auf dem angegebenen Kreis als dunkler oder heller bezeichnet sind und die verbleibenden Pixel auf dem angegebenen Kreis als ähnlich bezeichnet sind.

4. Verfahren nach einem der vorhergehenden Ansprüche, wobei dem Verifizierungsschritt das Verwerfen eines interessierenden Pixels vorausgeht, für das die gegenüberliegenden Pixel auf dem Kreis weder dunkler als das interessierende Pixel minus Bereich m noch heller als das interessierende Pixel plus Bereich m sind, und somit der Verifizierungsschritt nicht durchgeführt wird.

**Revendications**

1. Méthode de détection d'un trait dans une image comprenant :

   pour chaque pixel d'intérêt (p) dans l'image, un choix de tous les pixels sur un cercle ayant son centre dans le pixel d'intérêt;
   un marquage de chacun des N pixels sur ledit cercle comme similaire ou plus clair en fonction de la comparaison avec l'intensité du pixel d'intérêt en utilisant le paramètre de plage;
   un choix de pixels d'intérêt où, sur ledit cercle, il existe un segment de pixels continus marqués comme plus foncés ou plus clairs (Pb), un ou deux segments distincts sur ledit cercle sont marqués comme similaires (Ps, Ps'), la longueur de ces segments similaires est inférieure ou égale à N/4 et les pixels restants sont marqués comme plus foncés ou plus clairs (Pb');
   une réalisation d'une étape de vérification servant à éliminer les fausses détections consistant à marquer le pixel d'intérêt comme une partie d'une fonction de détection d'un trait dans l'image, si les pixels à l'intérieur du cercle sont marqués comme similaires en utilisant un paramètre de plage m, un ou deux segments distincts sont marqués comme similaires et forment, avec le pixel d'intérêt, une zone continue.

2. Méthode selon la revendication 1, où il y a deux segments distincts marqués comme similaires, l'un des segments marqués comme plus foncé ou plus clair a une longueur d'au moins N/2-1 pixels.

3. Méthode selon la revendication 1, dans lequel il existe un segment distinct marqué comme similaire, avec une étape supplémentaire de choix de pixel, où au moins N/2+1 de pixels continus sur ledit cercle sont marqués comme plus foncés ou plus clairs et les pixels restants sur ledit cercle sont marqués comme similaires.

4. Méthode selon l'une quelconque des revendications précédentes où l'étape de vérification est précédée du rejet du pixel d'intérêt pour lequel les pixels opposés sur le cercle ne sont pas plus foncés que le pixel d'intérêt moins la plage m ni plus claires que le pixel d'intérêt plus la plage m et l'étape de vérification n'est donc pas réalisée.

Figure 1

Figure 2

Figure 3

Figure 4

Figure 5

Figure 6

Figure 7

Figure 8

Figure 9

(a)  (b)  (c)  (d)

Figure 10

## Text Fragment Detectors Comparison

|D| / |GT|    t[ms]

Figure 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2015213312 A

- EP 0961218 A

### Non-patent literature cited in the description

- **A. BISSACCO ; M. CUMMINS ; Y. NETZER ; H. NEVEN.** PhotoOCR: reading text in uncontrolled conditions. *ICCV,* 2013
- **C. YAO ; X. BAI ; W. LIU ; Y. MA ; Z. TU.** Detecting texts of arbitrary orientations in natural images. *CVPR,* 2012
- **B. EPSHTEIN ; E. OFEK ; Y. WEXLER.** Detecting text in natural scenes with stroke width transform. *CVPR,* 2010, 2963-2970
- ICDAR 2013 robust reading competition. **D. KARATZAS ; F. SHAFAIT ; S. UCHIDA ; M. IWAMURA ; S. R. MESTRE ; J. MAS ; D. F. MOTA ; J. A. ALMAZAN ; L. P. DE LAS HERAS et al.** ICDAR 2013. IEEE, 2013, 1484-1493
- **J. MATAS ; O. CHUM ; M. URBAN ; T. PAJDLA.** Robust wide-baseline stereo from maximally stable extremal regions. *Image and Vision Computing,* 2004, vol. 22, 761-767
- **L. NEUMANN ; J. MATAS.** Efficient scene text localization and recognition with local character refinement. *arXiv:1504.03522,* 2015
- Orb: an efficient alternative to sift or surf. **E. RUBLEE ; V. RABAUD ; K. KONOLIGE ; G. BRADSKI.** Computer Vision (ICCV), 2011 IEEE International Conference on. IEEE, 2011, 2564-2571
- **K. WANG ; B. BABENKO ; S. BELONGIE.** End-to-end scene text recognition. *ICCV 2011,* 2011

- Deep features for text spotting. **M. JADERBERG ; A. VEDALDI ; A. ZISSERMAN.** Computer Vision-ECCV 2014. Springer, 2014, 512-528
- **T. E. DE CAMPOS ; B. R. BABU ; M. VARMA.** Character recognition in natural images. *VISAPP,* 05 February 2009
- **X.-C. YIN ; X. YIN ; K. HUANG ; H.-W. HAO.** Robust text detection in natural scene images. *Pattern Analysis and Machine Intelligence, IEEE Transactions on,* vol. 36 (5), 970-983
- EXTRACTION OF BINARY CHARACTER/GRAPHICS IMAGES FROM GRAYSCALE DOCUMENT IMAGES. **MOHAMED KAMEL et al.** CVGIP GRAPHICAL MODELS AND IMAGE PROCESSING. ACADEMIC PRESS, 01 May 1993, vol. 55, 203-217
- **ROSTEN E et al.** Faster and Better: A Machine Learning Approach to Corner Detection. *IEEE TRANSACTIONS ON PATTERN ANALYSIS AND MACHINE INTELLIGENCE, IEEE COMPUTER SOCIETY, USA,* 01 January 2010, vol. 32 (1), ISSN 0162-8828, 105-119
- Fusing Points and Lines for High Performance Tracking. **ROSTEN E et al.** COMPUTER VISION, 2005. ICCV 2005. TENTH IEEE INTERNATIONAL CONFERENCE ON BEIJING, CHINA 17-20 OCT. 2005, PISCATAWAY, NJ, USA. IEEE, 17 October 2005, vol. 2, 1508-1515